# EUROPEAN PATENT SPECIFICATION

(11) **EP 3 010 301 B1**
(45) Date of publication and mention of the grant of the patent: **11.07.2018**
(21) Application number: 15190259.0
(22) Date of filing: 16.10.2015
(51) Int. Cl.: H04W 72/08, H04W 72/04

(54) **METHOD AND APPARATUS FOR IMPROVING RESOURCE CONTROL IN A WIRELESS COMMUNICATION SYSTEM**
VERFAHREN UND VORRICHTUNG ZUR VERBESSERUNG DER RESSOURCENSTEUERUNG IN EINEM DRAHTLOSKOMMUNIKATIONSSYSTEM
PROCÉDÉ ET APPAREIL POUR AMÉLIORER LE CONTRÔLE DES RESSOURCES DANS UN SYSTÈME DE COMMUNICATIONS SANS FIL

(30) Priority: 17.10.2014 US 201462065219 P; 17.10.2014 US 201462065249 P; 13.10.2015 US 201514881771
(43) Date of publication of application: 20.04.2016
(73) Proprietor: ASUSTeK Computer Inc., Peitou Dist. Taipei City 11259 (TW)
(72) Inventor: OU, Meng-Hui, 112 Taipei City (TW); LI, Ming-Che, 112 Taipei City (TW); GUO, Yu-Hsuan, 112 Taipei City (TW)
(74) Representative: Hoefer & Partner Patentanwälte mbB

(56) References cited:
- WO-A1-2013/115567
- US-A1- 2014 056 230
- US-A1- 2014 226 504
- XIAOHANG CHEN ET AL: "Downlink resource allocation for Device-to-Device communication underlaying cellular networks", 2012 IEEE 23RD INTERNATIONAL SYMPOSIUM ON PERSONAL, INDOOR AND MOBILE RADIO COMMUNICATIONS (PIMRC 2012) : SYDNEY, AUSTRALIA, 9 - 12 SEPTEMBER 2012, IEEE, PISCATAWAY, NJ, 9 September 2012 (2012-09-09), pages 232-237, XP032272938, DOI: 10.1109/PIMRC.2012.6362746 ISBN: 978-1-4673-2566-0
- Deliverable D2: "Document Number: ICT-317669-METIS/D2.2 Project Name: Mobile and wireless communications Enablers for the Twenty-twenty Information Society (METIS)", , 31 October 2013 (2013-10-31), XP055248875, Retrieved from the Internet: URL:https://www.metis2020.com/wp-content/u ploads/deliverables/METIS_D2.2_v1.pdf [retrieved on 2016-02-10]
- Petar Popovski ET AL: "Deliverable D2.3 Components of a new air interface -building blocks and performance Project Name: Mobile and wireless communications Enablers for the Twenty-twenty Information Society Author(s)", , 30 April 2014 (2014-04-30), XP055248878, Retrieved from the Internet: URL:https://www.metis2020.com/wp-content/u ploads/deliverables/METIS_D2.3_v1.pdf [retrieved on 2016-02-10]

## Description

### CROSS-REFERENCE TO RELATED APPLICATIONS

The present Application claims the benefit of U.S. Provisional Patent Application Serial No. 62/065,219 filed on October 17, 2014 and U.S. Provisional Patent Application Serial No. 62/065,249 filed on October 17, 2014.

### FIELD

This disclosure generally relates to wireless communication networks, and more particularly, to a method and apparatus for improving resource control and device to device (D2D) transmission in a wireless communication system.

### BACKGROUND

With the rapid rise in demand for communication of large amounts of data to and from mobile communication devices, traditional mobile voice communication networks are evolving into networks that communicate with Internet Protocol (IP) data packets. Such IP data packet communication can provide users of mobile communication devices with voice over IP, multimedia, multicast and on-demand communication services.

An exemplary network structure for which standardization is currently taking place is an Evolved Universal Terrestrial Radio Access Network (E-UTRAN). The E-UTRAN system can provide high data throughput in order to realize the above-noted voice over IP and multimedia services. The E-UTRAN system's standardization work is currently being performed by the 3GPP standards organization. Accordingly, changes to the current body of 3GPP standard are currently being submitted and considered to evolve and finalize the 3GPP standard.

US2014056230A1 discloses systems and methods for selecting a resource for a direct device-to-device (D2D) communication link between wireless devices in a cellular communication network.

WO2013/115567A1 discloses a method for transmitting feedback information on device to device (D2D) transmission data in a wireless communication system for supporting D2D communication.

### SUMMARY

The invention is defined in the independent claims. The dependent claims define preferred embodiments. Methods and apparatuses are disclosed for improving resource control and device to device transmission in a wireless communication system. In one method, a device receives a configuration including at least a first contention-based resource pool and a second contention-based resource pool, wherein the first contention-based resource pool includes resources for multiplexing D2D transmission(s) and Downlink (DL) transmission(s) in power domain, and the second contention-based resource pool does not include the resources for multiplexing D2D transmission(s) and DL transmission(s) in power domain. The device also receives at least one threshold value related to a power. The device then selects the first contention-based resource pool or the second contention-based resource pool for D2D transmission based on at least the threshold value.

### BRIEF DESCRIPTION OF THE DRAWINGS

FIG. 1 shows a diagram of a wireless communication system according to one exemplary embodiment.
FIG. 2 is a block diagram of a transmitter system (also known as access network) and a receiver system (also known as user equipment or UE) according to one exemplary embodiment.
FIG. 3 is a functional block diagram of a communication system according to one exemplary embodiment.
FIG. 4 is a functional block diagram of the program code of FIG. 3 according to one exemplary embodiment.
FIG. 5 is a reproduction of a Network topology shown in METIS Deliverable D2.3, "Components of a new air interface - building blocks and performance".
FIG. 6 is a flow diagram according to one exemplary embodiment.
FIG. 7 is a flow diagram according to another exemplary embodiment.
FIG. 8 is a flow diagram according to yet another exemplary embodiment.
FIG. 9 is a diagram illustrating signaling flow according to one exemplary embodiment.
FIG. 10 is diagram illustrating signaling flow according to one exemplary embodiment.

### DETAILED DESCRIPTION

The exemplary wireless communication systems and devices described below employ a wireless communication system, supporting a broadcast service. Wireless communication systems are widely deployed to provide various types of communication such as voice, data, and so on. These systems may be based on code division multiple access (CDMA), time division multiple access (TDMA), orthogonal frequency division multiple access (OFDMA), 3GPP LTE (Long Term Evolution) wireless access, 3GPP LTE-A or LTE-Advanced (Long Term Evolution Advanced), 3GPP2 UMB (Ultra Mobile Broadband), WiMax, or some other modulation techniques.

In particular, the exemplary wireless communication systems devices described below may be designed to the wireless technology discussed in various documents of the Mobile and wireless communications Enablers for Twenty-twenty (2020) Information Society (METIS) project, including: N. Pratas, P. Popovski, "Underlay of Low-Rate Machine-Type D2D Links on Downlink Cellular Links", ICC 2014 Workshop, June 10-14, 2014, Sydney, Australia;METIS Deliverable D2.1, "Requirement analysis and design approaches for 5G air interface"; METIS Deliverable D2.2, "Novel radio link concepts and state of the art analysis"; METIS Deliverable D2.3, "Components of a new air interface - building blocks and performance".

Furthermore, the exemplary wireless communication systems devices described below may be designed to support one or more standards such as the standard offered by a consortium named "3rd Generation Partnership Project" referred to herein as 3GPP, including: 3GPP TR 23.887 V12.0.0, "Study on Machine-Type Communications (MTC) and other mobile data applications communications enhancements"; 3GPP TR 36.843 V12.0.1, "Study on LTE device to device proximity services; Radio aspects"; 3GPP TS 36.300 V12.3.0, "E-UTRA and E-UTRAN; Overall description; Stage 2"; 3GPP TS 36.321 V12.3.0, "E-UTRA; MAC protocol specification"; 3GPP TS 36.331 V12.3.0, "E-UTRA; RRC protocol specification"; and 3GPP R2-144542, "Introduction of ProSe." The standards and documents listed above are hereby expressly incorporated by reference in their entirety.

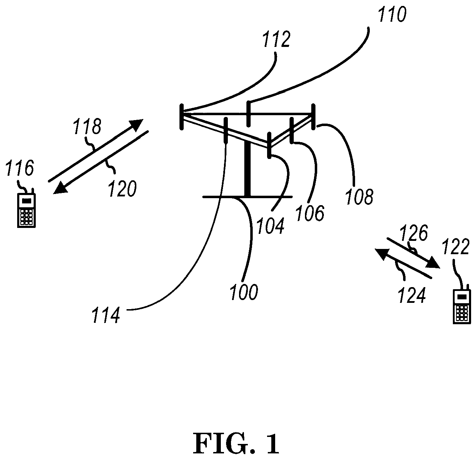

FIG. 1 shows a multiple access wireless communication system according to one embodiment of the invention. An access network 100 (AN) includes multiple antenna groups, one including 104 and 106, another including 108 and 110, and an additional including 112 and 114. In FIG. 1, only two antennas are shown for each antenna group, however, more or fewer antennas may be utilized for each antenna group. Access terminal 116 (AT) is in communication with antennas 112 and 114, where antennas 112 and 114 transmit information to access terminal 116 over forward link 120 and receive information from access terminal 116 over reverse link 118. Access terminal (AT) 122 is in communication with antennas 106 and 108, where antennas 106 and 108 transmit information to access terminal (AT) 122 over forward link 126 and receive information from access terminal (AT) 122 over reverse link 124. In a FDD system, communication links 118, 120, 124 and 126 may use different frequency for communication. For example, forward link 120 may use a different frequency then that used by reverse link 118.

Each group of antennas and/or the area in which they are designed to communicate is often referred to as a sector of the access network. In the embodiment, antenna groups each are designed to communicate to access terminals in a sector of the areas covered by access network 100.

In communication over forward links 120 and 126, the transmitting antennas of access network 100 may utilize beamforming in order to improve the signal-to-noise ratio of forward links for the different access terminals 116 and 122. Also, an access network using beamforming to transmit to access terminals scattered randomly through its coverage causes less interference to access terminals in neighboring cells than an access network transmitting through a single antenna to all its access terminals.

An access network (AN) may be a fixed station or base station used for communicating with the terminals and may also be referred to as an access point, a Node B, a base station, an enhanced base station, an evolved Node B (eNB), or some other terminology. An access terminal (AT) may also be called user equipment (UE), a wireless communication device, terminal, access terminal or some other terminology.

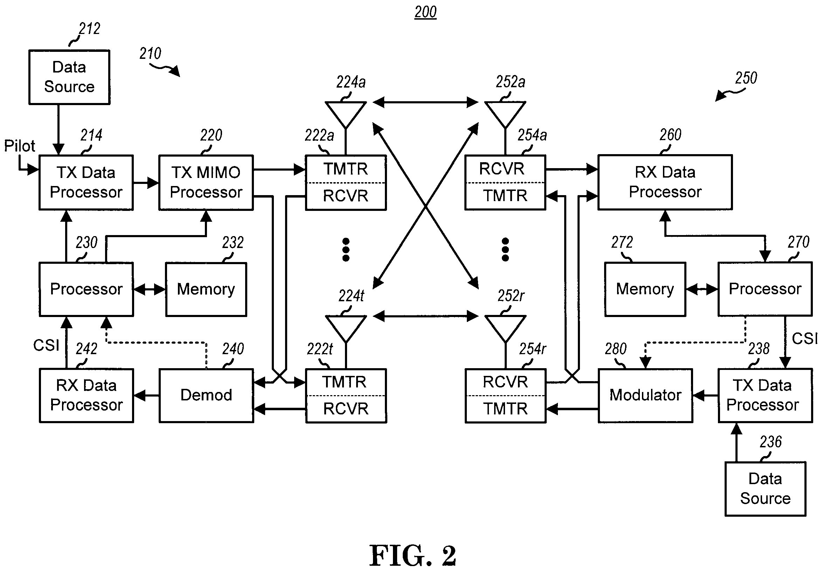

FIG. 2 is a simplified block diagram of an embodiment of a transmitter system 210 (also known as the access network) and a receiver system 250 (also known as access terminal (AT) or user equipment (UE)) in a MIMO system 200. At the transmitter system 210, traffic data for a number of data streams is provided from a data source 212 to a transmit (TX) data processor 214.

In one preferred embodiment, each data stream is transmitted over a respective transmit antenna. TX data processor 214 formats, codes, and interleaves the traffic data for each data stream based on a particular coding scheme selected for that data stream to provide coded data.

The coded data for each data stream may be multiplexed with pilot data using OFDM techniques. The pilot data is typically a known data pattern that is processed in a known manner and may be used at the receiver system to estimate the channel response. The multiplexed pilot and coded data for each data stream is then modulated (i.e., symbol mapped) based on a particular modulation scheme (e.g., BPSK, QPSK, M-PSK, or M-QAM) selected for that data stream to provide modulation symbols. The data rate, coding, and modulation for each data stream may be determined by instructions performed by processor 230.

The modulation symbols for all data streams are then provided to a TX MIMO processor 220, which may further process the modulation symbols (e.g., for OFDM). TX MIMO processor 220 then provides *N_{T}* modulation symbol streams to *N_{T}* transmitters (TMTR) 222a through 222t. In certain embodiments, TX MIMO processor 220 applies beamforming weights to the symbols of the data streams and to the antenna from which the symbol is being transmitted.

Each transmitter 222 receives and processes a respective symbol stream to provide one or more analog signals, and further conditions (e.g., amplifies, filters, and upconverts) the analog signals to provide a modulated signal suitable for transmission over the MIMO channel. *N_{T}* modulated signals from transmitters 222a through 222t are then transmitted from *N_{T}* antennas 224a through 224t, respectively.

At receiver system 250, the transmitted modulated signals are received by *N_{R}* antennas 252a through 252r and the received signal from each antenna 252 is provided to a respective receiver (RCVR) 254a through 254r. Each receiver 254 conditions (e.g., filters, amplifies, and downconverts) a respective received signal, digitizes the conditioned signal to provide samples, and further processes the samples to provide a corresponding "received" symbol stream.

An RX data processor 260 then receives and processes the *N_{R}* received symbol streams from *N_{R}* receivers 254 based on a particular receiver processing technique to provide *N_{T}* "detected" symbol streams. The RX data processor 260 then demodulates, deinterleaves, and decodes each detected symbol stream to recover the traffic data for the data stream. The processing by RX data processor 260 is complementary to that performed by TX MIMO processor 220 and TX data processor 214 at transmitter system 210.

A processor 270 periodically determines which pre-coding matrix to use (discussed below). Processor 270 formulates a reverse link message comprising a matrix index portion and a rank value portion.

The reverse link message may comprise various types of information regarding the communication link and/or the received data stream. The reverse link message is then processed by a TX data processor 238, which also receives traffic data for a number of data streams from a data source 236, modulated by a modulator 280, conditioned by transmitters 254a through 254r, and transmitted back to transmitter system 210.

At transmitter system 210, the modulated signals from receiver system 250 are received by antennas 224, conditioned by receivers 222, demodulated by a demodulator 240, and processed by a RX data processor 242 to extract the reserve link message transmitted by the receiver system 250. Processor 230 then determines which pre-coding matrix to use for determining the beamforming weights then processes the extracted message.

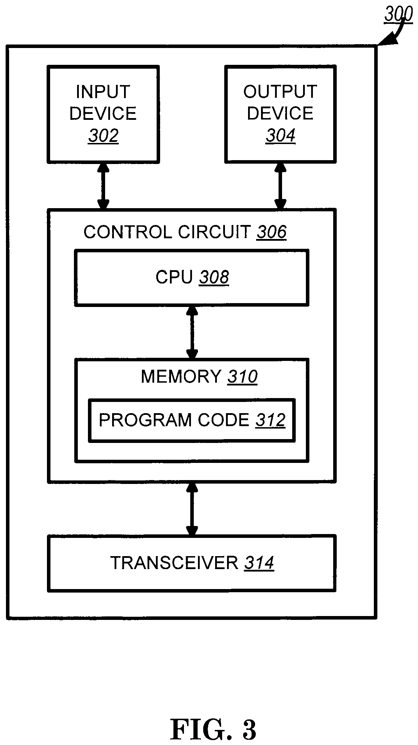

Turning to FIG. 3, this figure shows an alternative simplified functional block diagram of a communication device according to one embodiment of the invention. As shown in FIG. 3, the communication device 300 in a wireless communication system can be utilized for realizing the UEs (or ATs) 116 and 122 in FIG. 1 or the base station (or AN) 100 in FIG. 1, and the wireless communications system is preferably the LTE system. The communication device 300 may include an input device 302, an output device 304, a control circuit 306, a central processing unit (CPU) 308, a memory 310, a program code 312, and a transceiver 314. The control circuit 306 executes the program code 312 in the memory 310 through the CPU 308, thereby controlling an operation of the communications device 300. The communications device 300 can receive signals input by a user through the input device 302, such as a keyboard or keypad, and can output images and sounds through the output device 304, such as a monitor or speakers. The transceiver 314 is used to receive and transmit wireless signals, delivering received signals to the control circuit 306, and outputting signals generated by the control circuit 306 wirelessly. The communication device 300 in a wireless communication system can also be utilized for realizing the AN 100 in FIG. 1.

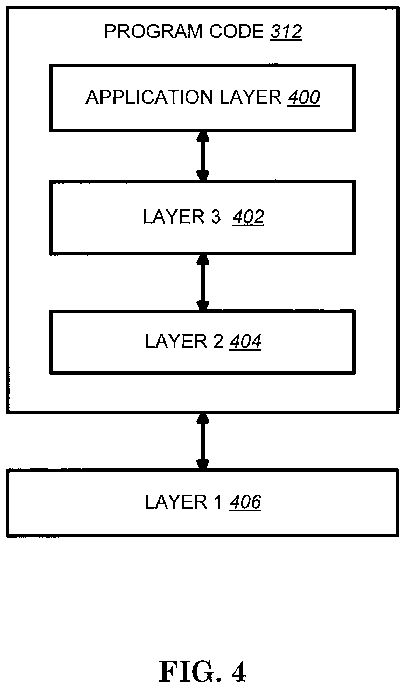

FIG. 4 is a simplified block diagram of the program code 312 shown in FIG. 3 in accordance with one embodiment of the invention. In this embodiment, the program code 312 includes an application layer 400, a Layer 3 portion 402, and a Layer 2 portion 404, and is coupled to a Layer 1 portion 406. The Layer 3 portion 402 generally performs radio resource control. The Layer 2 portion 404 generally performs link control. The Layer 1 portion 406 generally performs physical connections.

For LTE or LTE-A systems, the Layer 2 portion 404 may include a Radio Link Control (RLC) layer and a Medium Access Control (MAC) layer. The Layer 3 portion 402 may include a Radio Resource Control (RRC) layer.

Generally, machine type communication (MTC) and device-to-device (D2D) communication are both considered as emerging technology trends in future communication system. In 3GPP, these two types of communications have been taken into account for the design of LTE-A system as described in 3GPP TR 23.887 V12.0.0 and 3GPP TR 36.843 V12.0.1. The overall architecture of LTE/LTE-A is described in 3GPP TS 36.300 V12.3.0.

In METIS 2020 Project (https://www.metis2020.com), Massive Machine Communication (MMC) and direct device-to-device (D2D) communication have also been identified as two of the horizontal topics (HTs) that would be investigated in several work packages (WPs) of METIS.

Among the Work Packages (WPs) of METIS, WP2 takes care of radio link concepts, and various radio link related research topics have been identified including optimized signaling for low-cost MMC devices (SIG-MMC) (See METIS Deliverable D2.1). And according to section 2.2.1 of METIS Deliverable 2.2:
The MMC devices are expected to be low-cost, which implies that these will have reduced transceiver complexity such as lower transmission power, single antenna, reduced RF bandwidth, and low baseband computational power. All these factors will introduce a reduction of the coverage; therefore there is the need to investigate low-cost enhancements for improving the coverage, which can range from alternative transmission schemes to the use of aggregation devices. This motivates the recourse to alternative approaches that can take advantage of legacy systems (such as the paging network) to achieve large scale downlink coverage for MMC and the use of the coordinated relay and device-to-device paradigm to enable reliable uplink coverage for MMC and efficient coexistence with non-MMC devices.

Furthermore, in technology component cluster (TeCC) #2 of METIS Deliverable 2.3, "MMC type D2D links" is the solution proposed currently for low-cost MMC devices:
MTC devices (MTDs) pose new challenges to the cellular network, such as low transmission power and massive access that can lead to overload of the radio interface. In this research track we explore the opportunity opened by D2D links for supporting Low-rate Low-power MTDs that are connected to a nearby device, such as an on-body MTD connected to a mobile phone that acts as a relay towards a Base Station.

According to a research paper entitled "Underlay of low-rate machine-type D2D links on downlink cellular links" by N. Pratas and P. Popovski, the MTC device which is suitable for using D2D links may have following characteristics: constrained battery life; delay tolerant (e.g. non-threatening life condition); in close proximity to a smart phone; and requires low rate and a very low transmission power, insufficient to connect directly to the base station.

The low-rate requirement for the MTD-D2D connection allows underlay operation with Successive Interference Cancellation (SIC) during the cellular downlink transmissions. The MTD signal can be decoded after cancelling the interference caused by the downlink signal from the based station.

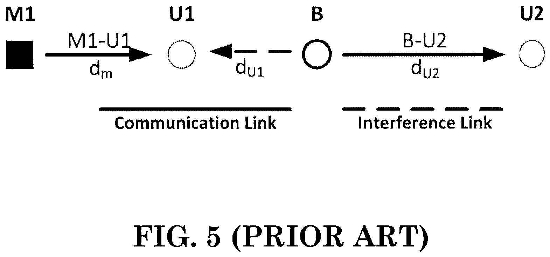

As an example, FIG. 5 shows a D2D transmission from a MTD M1 to a cellular device U1 can be an underlay transmission that occurs simultaneously with a downlink transmission from a base station B to another cellular device U2 using the same resource in the same frequency and in the same time. The M1-U1 transmission is interfered by the B-U2 transmission, while it is assumed that there is no interference from M1 to any cellular device due to the very low transmission power. The low rate and the low transmission power of M1 may allow U1 to successfully decode the downlink transmission B-U2, cancel it, and then attempt to decode the signal from M1.

The results of analysis in the Pratas et al. paper show the possibility for low power and fixed rate Machine-Type devices to share the air interface with normal cellular devices, but there can be a rate penalty for the cellular users. The results show that the cellular transmissions directed to distant (e.g. cell-edge located) cellular devices that due to the pathloss attenuation lead to lower achievable rates are seen as good candidates to be underlay by machine-type D2D links.

In LTE, network can use a control signaling, e.g. via PDCCH, indicating either a downlink (DL) transmission or resource for a uplink (UL) transmission as described in 3GPP TS 36.300 V12.3.0:
11.1.1 Downlink Scheduling
   In the downlink, E-UTRAN can dynamically allocate resources (PRBs and MCS) to UEs at each TTI via the C-RNTI on PDCCH(s). A UE always monitors the PDCCH(s) in order to find possible allocation when its downlink reception is enabled (activity governed by DRX when configured).
   [...]
11.1.2 Uplink Scheduling
   In the uplink, E-UTRAN can dynamically allocate resources (PRBs and MCS) to UEs at each TTI via the C-RNTI on PDCCH(s). A UE always monitors the PDCCH(s) in order to find possible allocation for uplink transmission when its downlink reception is enabled (activity governed by DRX when configured).

The method disclosed in METIS Deliverable D2.2 and D2.3 provides the possibility for a device to device (D2D) signal to reuse the same resource in the same timing as used by a downlink (DL) signal. If a pair of the D2D signal and the DL signal can be selected properly, throughput can be increased because the same resource is used by two transmissions simultaneously with the aid of Successive Interference Cancellation (SIC). In addition to a machine-type D2D transmission, a normal D2D transmission (e.g. non-machine-type D2D) can also apply the same technique. In other words, D2D transmission can be performed using the same resource of DL transmission simultaneously with the aid of SIC regardless of whether the D2D transmission is machine-type or not.

A D2D resource needs to be allocated to a D2D device to perform a D2D transmission. The D2D resource may be contention-based or non-contention-based. For a contention-based resource, it may be allocated via a dedicated signaling or a broadcast signaling. For example, a resource pool can be configured using broadcast signaling, and a D2D device selects a resource from the resource pool for D2D transmission. However, if a technique such as SIC to multiplex D2D transmission and DL transmission in a power domain is used, the D2D resource allocation requires further control since not all D2D transmissions are suitable to be multiplexed with DL transmission in power domain and share the same time/frequency resource due to power ratio constraint to perform SIC successfully. The technique of multiplexing D2D transmission and DL transmission in a power domain may require a D2D receiver to decode a DL transmission from the received signal (and cancel the DL transmission from the received signal) before decoding a D2D transmission.

In order to control the resource properly, there should be a differentiation between the resource for D2D transmission which may be multiplexed with DL transmission in a power domain and the resource for D2D transmission which is not to be multiplexed with DL transmission in power domain. Otherwise, a base station cannot identify which D2D resource can be used for DL transmission. One possibility is that these two types of resources are differentiated using at least two different resource pools. Even with differentiation, a further issue which needs to be solved is how a D2D device determines which type of resources to select.

In the various embodiments disclosed herein, resources to be used for D2D transmission(s) and DL transmission(s) multiplexed in the power domain are differentiated from resources not to be used for D2D transmission(s) and DL transmission(s) multiplexed in the power domain. A D2D device uses a threshold to select which type of resource is used for the D2D transmission. For example, a first resource pool is configured for D2D resources to be reused with DL transmission, and a second resource pool is configured for a D2D resource dedicated to a D2D transmission.

In one preferred embodiment, a second device provides an indication to a first device based on the threshold. The indication may indicate whether the first device should select a first resource or a second resource. Alternatively, the indication may indicate whether a measured result or a computed result exceeds the threshold or not. Preferably the first device may be a transmitter of a D2D transmission and the second device may be a receiver of the D2D transmission. A measured result or a computed result is compared with the threshold. Preferably or alternatively a received power of a D2D transmission is taken into account. For example, the received power of a D2D transmission is compared with the threshold. Further preferably or alternatively a received power of a DL transmission is taken into account. For example, the received power of a DL transmission is compared with the threshold. Further preferably or alternatively a ratio of the received power of the D2D transmission and the received power of the DL transmission is compared with the threshold. More specifically, the indication indicates that the first resource should be selected if the measured result or the computed result exceeds the threshold. The indication indicates that the second resource should be selected if the measured result or the computed result does not exceed the threshold.

In general, the threshold value is configured by a network node, e.g. via broadcast signaling, system information, or dedicated signaling. Preferably the threshold value is related to a received power. Additionally or alternatively preferably, the threshold value is related to one of more of the following: Signal to Interference plus Noise Ratio (SINR), Reference Signal Received Power (RSRP), Reference Signal Receive Quality (RSRQ), or pathloss. The received power (or SINR, RSRP, RSRQ, pathloss) value may be for a DL transmission or a D2D transmission. Alternatively, the threshold value is related to a ratio of a received power (or SINR, RSRP, RSRQ, pathloss) between a DL transmission and a D2D transmission.

Preferably the first resource for D2D transmission is multiplexed with DL transmission in the power domain. The second resource is not multiplexed with DL transmission in the power domain. The first resource may belong to a first resource pool which may be multiplexed with DL transmission in the power domain. The second resource may belong to a second resource pool not to be multiplexed with DL transmission in the power domain. Additionally, the first resource is contention-based. The second resource is contention-based.

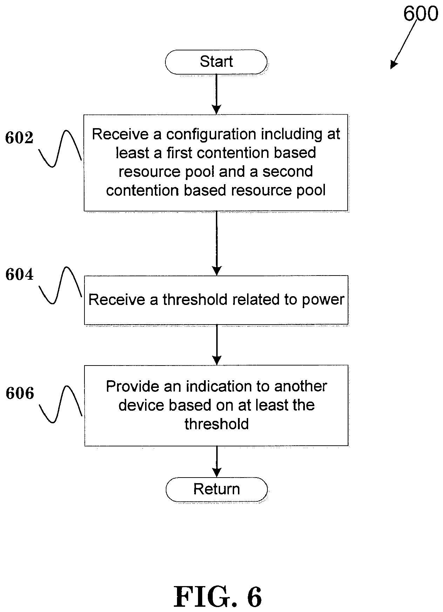

FIG. 6 is a flow chart 600 according to one exemplary embodiment from the perspective of a device. In Step 602, a device receives a configuration including at least a first contention-based resource pool and a second contention-based resource pool. At step 604, the device receives at least one threshold value related to power. At step 606, the device provides an indication to another device based on at least the threshold value.

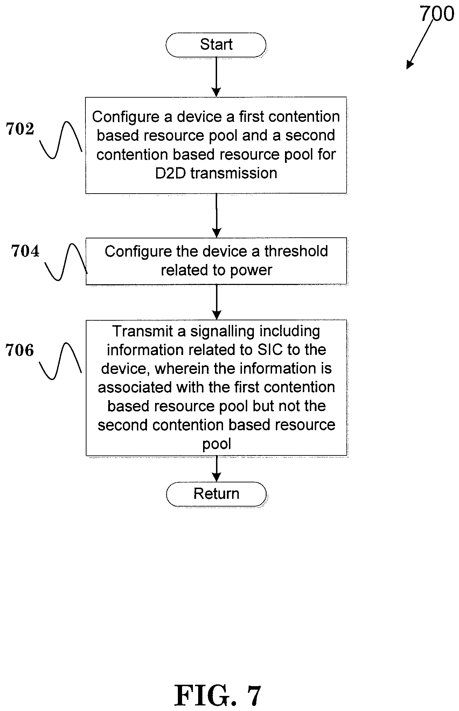

FIG. 7 is a flow chart 700 according to another exemplary embodiment from the perspective of a network node. In Step 702, the network node configures a device with a first contention-based resource pool and a second contention-based resource pool for D2D transmission. At step 704, the network node configures the device with at least one threshold value related to power. At step 706, the network node transmits a signaling including information related to SIC to the device, wherein the information associated with the first contention-based resource pool but not the second contention-based resource pool.

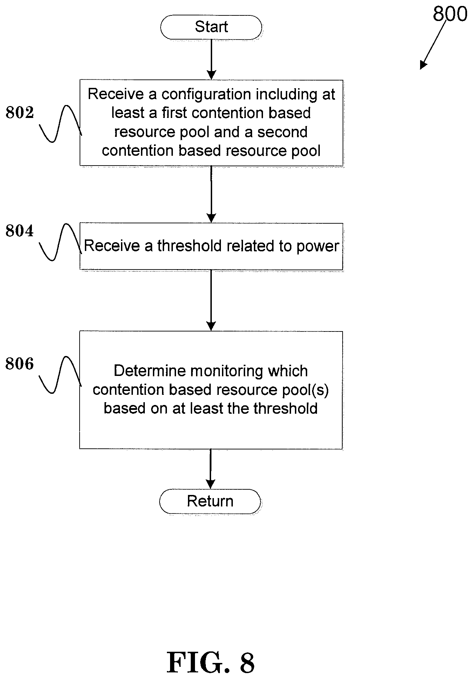

FIG. 8 is a flow chart 800 according to yet another exemplary embodiment from the perspective of a device. In Step 802, a device receives a configuration including at least a first contention-based resource pool and a second contention-based resource pool. At step 804, the device received at least one threshold value related to power. At step 806, the device determines which contention-based resource pool(s) to monitor based on at least the threshold value.

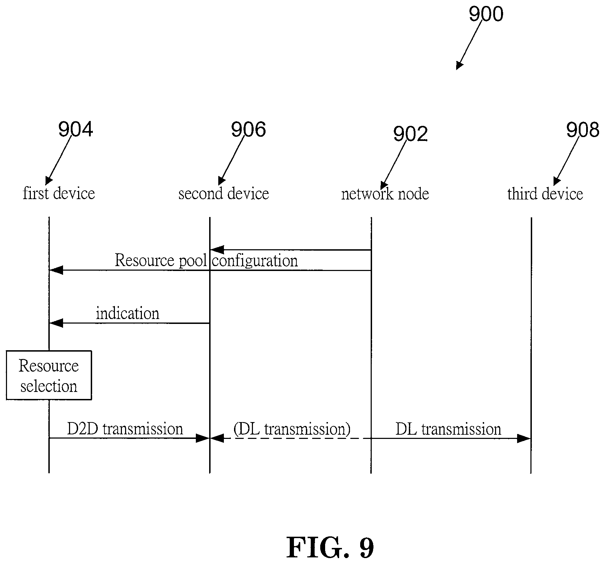

FIG. 9 illustrates one exemplary embodiment of signal flow in a network 900. As shown in FIG. 9, there is a network node 902 in communication with first, second, and third devices 904, 906, 908. As shown in FIG. 9, a resource pool configuration is sent to the first and second devices 904, 906. An indication is sent from the second device 906 to the first device 904. The first device 904 performs a resource selection. As discussed in previous embodiments, the first device 904 selects a type of resource for transmitting D2D transmission based on the indication and the second device 906 uses a threshold to select which type of resource is used for monitoring the D2D transmission. As shown in FIG. 9, the first device 904 sends a D2D transmission to the second device 906 on the same resource that is used by the network node 902 to send DL transmissions.

In one exemplary method for resource control, a device receives a configuration including at least a first contention-based resource pool and a second contention-based resource pool. The device also receives at least one threshold value related to a power. The device then uses the threshold value to select the first contention-based resource pool or the second contention-based resource pool for D2D transmission.

In another exemplary method for resource control, a device receives a configuration including at least a first contention-based resource pool and a second contention-based resource pool. The device also receives at least one threshold value related to a power. The device then determines which contention-based resource pool(s) to monitor based on at least the threshold value.

In one embodiment, the first contention-based resource pool is monitored if a measured (or computed) result exceeds the threshold value. The second contention-based resource pool is monitored if a measured (or computed) result doesn't exceed the threshold. Preferably both the first contention-based resource pool and the second contention-based resource pool are monitored if the measured (or computed) result exceeds the threshold. Alternatively preferably, both the first contention-based resource pool and the second contention-based resource pool are monitored if the measured (or computed) result doesn't exceed the threshold.

In another exemplary method for resource control in a wireless communication system, the method includes a second device receiving a configuration including at least a first contention-based resource pool and a second contention-based resource pool. The second device also receives at least one threshold value related to a power. The second device then determines providing an indication to a first device based on at least the threshold value.

In another exemplary method for resource control in a wireless communication system, the method includes a network node configuring a second device with a first contention-based resource pool and a second contention-based resource pool for transmission. The method further includes transmitting, by the network node, a signaling including information related to Successive Interference Cancellation (SIC) to the second device, wherein the information is associated with the first contention-based resource pool but not associated with the second contention-based resource pool.

In these exemplary methods described above, the first contention-based resource pool is configured for D2D resources to be reused with DL transmission. More specifically, the D2D transmission using a resource of the first contention-based resource pool is multiplexed with DL transmission in power domain. In other words, the second device needs to decode a DL transmission before decoding the D2D transmission when the D2D transmission and the DL transmission use the same resource of the first contention-based resource pool. On the other hand, the second contention-based resource pool is configured for D2D resources dedicated to D2D transmission. More specifically, the D2D transmission using a resource of the second contention-based resource pool is not multiplexed with DL transmission in power domain. In other words, the second device does not need to decode a DL transmission before decoding the D2D transmission when the D2D transmission uses a resource of the second contention-based resource pool. Preferably the threshold value is configured together with the first contention-based resource pool and the second contention-based resource pool.

Referring back to FIGS. 3 and 4, in one embodiment from the perspective of a device, the device 300 includes a program code 312 stored in memory 310. The CPU 308 could execute program code 312 (i) to receive a configuration including at least a first contention-based resource pool and a second contention-based resource pool, wherein the first contention-based resource pool is configured for D2D resources to be reused with downlink transmission and the second contention-based resource pool is configured for D2D resources dedicated to D2D transmission, (ii) to receive at least one threshold value related to a power, and (iii) to use the threshold value to select the first contention-based resource pool or the second contention-based resource pool for D2D transmission. In addition, the CPU 308 can execute the program code 312 to perform all of the above-described actions and steps or others described herein.

Referring back to FIGS. 3 and 4, in one embodiment from the perspective of a device, the device 300 includes a program code 312 stored in memory 310. The CPU 308 could execute program code 312 (i) to receive a configuration including at least a first contention-based resource pool and a second contention-based resource pool, wherein the first contention-based resource pool is configured for D2D resources to be reused with downlink transmission and the second contention-based resource pool is configured for D2D resources dedicated to D2D transmission, (ii) to receive at least one threshold value related to a power, and (iii) to determine which contention-based resource pool to monitor based on at least the threshold value. In addition, the CPU 308 can execute the program code 312 to perform all of the above-described actions and steps or others described herein.

Referring back to FIGS. 3 and 4, in one embodiment from the perspective of a second device, the device 300 includes a program code 312 stored in memory 310. The CPU 308 could execute program code 312 (i) to receive a configuration including at least a first contention-based resource pool and a second contention-based resource pool, wherein the first contention-based resource pool is configured for D2D resources to be reused with downlink transmission and the second contention-based resource pool is configured for D2D resources dedicated to D2D transmission, (ii) to receive at least one threshold value related to a power, and (iii) to determine providing an indication to a first device based on at least the threshold value. In addition, the CPU 308 can execute the program code 312 to perform all of the above-described actions and steps or others described herein.

Referring back to FIGS. 3 and 4, in one embodiment from the perspective of a network node, the device 300 includes a program code 312 stored in memory 310. The CPU 308 could execute program code 312 (i) to configure a second device with a first contention-based resource pool and a second contention-based resource pool for transmission, and (ii) to transmit a signaling including information related to Successive Interference Cancellation (SIC) to the second device, wherein the information is associated with the first contention-based resource pool but not associated with the second contention-based resource pool. In addition, the CPU 308 can execute the program code 312 to perform all of the above-described actions and steps or others described herein.

As described above, some types of Machine Type Communication Devices (MTDs) may be low-cost devices with reduced transceiver complexity having lower transmission power. As a result, the coverage of these MTDs, e.g., uplink (UL) coverage, would be smaller than UEs with a normal transceiver. In other words, these MTDs may not be able to connect to a base station even though these MTDs are within the coverage of the base station, yet these MTDs may still be able to receive signaling from the base station, e.g., system information.

In METIS Deliverable 2.2 and 2.3, a disclosed method proposes that these MTDs use D2D transmission to directly communicate with other UEs. However, since these MTDs are not able to establish a connection to the base station and request dedicated resources from the base station for D2D transmission, e.g. due to limited UL coverage, these MTDs cannot identify the target of a dedicated signaling, e.g. used to provide dedicated resource, from the base station. Using contention-based resources for D2D transmission, e.g. broadcasted via system information, seems to be the only way to perform D2D transmission. LTE also provides contention-based resources for D2D transmission, e.g. Type 1 resource for ProSe direct discovery and Mode2 resource for ProSe direct communication as disclosed in 3GPP R2-144542. It still needs to be considered how the method disclosed in METIS Deliverable 2.2 and 2.3 works under the scenario when MTD uses contention-based resources, e.g. randomly select a resource for D2D transmission.

In addition to a MTD, non-MTD may also use the method disclosed in METIS Deliverable 2.2 and 2.3. In other words, D2D transmission can be performed using the same resource of DL transmission simultaneously with the aid of SIC regardless of whether the D2D transmission is from a MTD or not. For a non-MTD, contention-based resources may also be used. In order to perform SIC by the receiver of a D2D transmission, the receiver needs to know information, e.g., Modulation and Coding Scheme (MCS), used to decode a DL transmission that using the same resource in the same timing as the D2D transmission. Since the transmitter of the D2D transmission uses contention-based resources for the D2D transmission, the base station may not be aware of who is the receiver. Accordingly, there is a need for the base station to be able to efficiently provide the information to the receiver.

In various embodiments disclosed herein, a base station provides a contention-based D2D resource pool by broadcast, e.g. in system information. And the base station transmits a signaling, for example, via Physical Downlink Control Channel (PDCCH) or Enhanced Physical Downlink Control Channel (EPDCCH) as defined in 3GPP TS 36.300 V12.3.0, based on at least a sequence number such as UE identifier, Radio Network Temporary Identifier (RNTI) as defined in 3GPP TS 36.300 V12.3.0, or Device-to-Device Radio Network Temporary Identifier (D2D-RNTI), corresponding to the resource pool to all UEs receiving D2D transmissions using resources of the resource pool. This signaling also indicates information for SIC, such as MCS.

If a UE decides to receive the D2D transmissions using resources of the resource pool, the UE would monitor the signaling from the base station based on the sequence number. If the signaling is received, the UE would decode the D2D transmissions by SIC based on the information. For example, the base station uses the sequence number to scramble the signaling. The UE uses the sequence number to descramble the signaling. Preferably the sequence number is provided together with the resource pool. Alternatively, the sequence number is a fixed value.

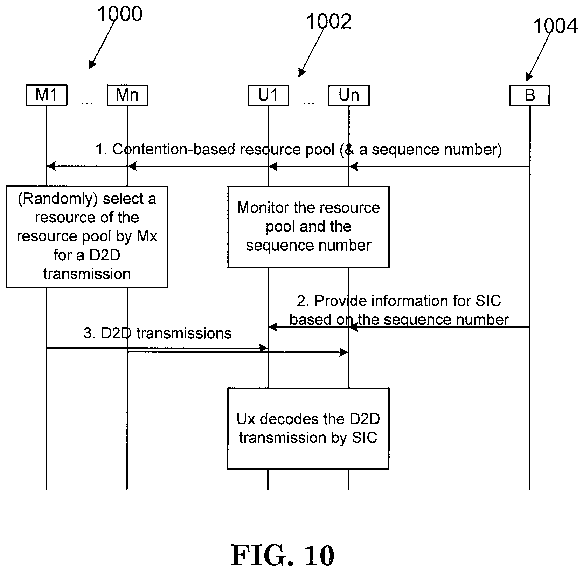

Referring now to FIG. 10, an exemplary method is shown in which Mx 1000 and Ux 1002 may be normal UEs or MTDs, and B 1004 is a base station. As shown in FIG. 10, Ux 1002 may receive step 2 signaling earlier than step 3 signaling. Alternatively, Ux 1002 may receive step 2 signaling and step 3 signaling in the same timing. Ux 1002 may receive DL signaling from B 1004 and step 3 signaling at the same time. As a result, Ux 1002 decodes the DL signaling based on step 2 signaling and decodes step 3 signaling by SIC.

In one exemplary method for device to device (D2D) transmission in a wireless communication, the method includes a network node providing at least one resource pool for at least one contention-based D2D transmission. The network node further transmits a signaling based on at least a same sequence number associated with the at least one resource pool, wherein the signaling is transmitted to all user equipment (UE) that receive the at least one contention-based D2D transmission.

In another exemplary method for D2D transmission, the method includes an user equipment receiving at least one resource pool for at least one contention-based D2D transmission by system information. The UE further receives a signaling from a network node based on at least a sequence number associated with the at least one resource pool if the UE is monitoring the at least one resource pool. The UE decodes the at least one contention-based D2D transmission based on at least the signaling. More specifically, the at least one contention-based D2D transmission is transmitted by other UE(s).

In the exemplary methods described above, the at least one resource pool includes resources for a plurality of the at least one contention-based D2D transmission within one subframe. The at least one resource pool may be indicated by broadcasting, such as system information, or dedicated signaling. Additionally, the signaling may be transmitted to all the UEs at once by broadcasting or multicasting. The signaling may not be transmitted to UEs that do not receive the at least one contention-based D2D transmission. The signaling may be transmitted via PDCCH or EPDCCH. Transmitting the signaling based on at least the sequence number means to scramble the signaling by the sequence number. Receiving the signaling based on at least the sequence number means to descramble the signaling by the sequence number.

In the exemplary methods described above, the at least one contention-based D2D transmission may be multiplexed with at least one DL transmission in power domain. Steps of decoding the at least one contention-based D2D transmission include: firstly decoding at least one DL transmission indicated by the signaling, cancelling the at least one DL transmission, and decoding the at least one contention-based D2D transmission.

In the exemplary methods described above, the signaling may indicate information related to SIC, or information for the UE(s) to perform SIC to decode the at least one contention-based D2D transmission. The signaling may indicate information related to DL transmission(s), MCS used by DL transmission(s), or information used to check integrity of DL transmission(s).

In the exemplary methods described above, the sequence number may be a fixed value, UE identifier, RNTI, or D2D-RNTI. The sequence number may be indicated by broadcasting, system information, or dedicated signaling. The sequence number may be indicated together with the at least one resource pool.

In the exemplary methods described above, the at least one resource pool for the at least one contention-based D2D transmission means that UE (randomly) selects a resource of the at least one resource pool by itself to perform the at least one contention-based D2D transmission. Preferably the resource pool for the at least one contention-based D2D transmission means that a plurality of the at least one contention-based D2D transmission uses the same resource of the at least one resource pool at the same time. In these various methods, the at least one contention-based D2D transmission may be used for D2D discovery or D2D communication.

In the exemplary methods described above, the first device is a UE, the second device is a UE. More specifically, the UE is a MTD, and the network node may be a base station, Node B, or eNB.

Referring back to FIGS. 3 and 4, in one embodiment from the perspective of a UE, the device 300 includes a program code 312 stored in memory 310. The CPU 308 could execute program code 312 (i) to receive at least one resource pool for at least one contention-based D2D transmission by system information, (ii) to receive a signaling from a network node based on at least a sequence number associated with the at least one resource pool if the UE is monitoring the at least one resource pool, and (iii) to decode the at least one contention-based D2D transmission based on at least the signaling. In addition, the CPU 308 can execute the program code 312 to perform all of the above-described actions and steps or others described herein.

Referring back to FIGS. 3 and 4, in one embodiment from the perspective of a UE, the device 300 includes a program code 312 stored in memory 310. The CPU 308 could execute program code 312 (i) to receive a configuration including at least a first contention-based resource pool and a second contention-based resource pool, wherein the first contention-based resource pool includes resources for multiplexing D2D transmission(s) and Downlink (DL) transmission(s) in power domain, and the second contention-based resource pool does not include the resources for multiplexing D2D transmission(s) and DL transmission(s) in power domain, (ii) to receive at least one threshold value related to a power, and (iii) to select the first contention-based resource pool or the second contention-based resource pool for D2D transmission based on at least the threshold value. In addition, the CPU 308 can execute the program code 312 to perform all of the above-described actions and steps or others described herein.

Referring back to FIGS. 3 and 4, in one embodiment from the perspective of a network node, the device 300 includes a program code 312 stored in memory 310. The CPU 308 could execute program code 312 (i) to provide at least one resource pool for at least one contention-based D2D transmission, and (ii) to transmit a signaling based on at least a same sequence number associated with the at least one resource pool, wherein the signaling is transmitted to all user equipment (UE) that receive the at least one contention-based D2D transmission. In addition, the CPU 308 can execute the program code 312 to perform all of the above-described actions and steps or others described herein.

Based on above embodiments and method, a D2D device can determine whether to select a D2D resource which may be simultaneously used by DL transmission(s). Resource utilization can be improved even for contention-based D2D transmissions. Also, the base station can efficiently provide information related to SIC to proper UEs.

Various aspects of the disclosure have been described above. It should be apparent that the teachings herein may be embodied in a wide variety of forms and that any specific structure, function, or both being disclosed herein is merely representative. Based on the teachings herein one skilled in the art should appreciate that an aspect disclosed herein may be implemented independently of any other aspects and that two or more of these aspects may be combined in various ways. For example, an apparatus may be implemented or a method may be practiced using any number of the aspects set forth herein. In addition, such an apparatus may be implemented or such a method may be practiced using other structure, functionality, or structure and functionality in addition to or other than one or more of the aspects set forth herein. As an example of some of the above concepts, in some aspects concurrent channels may be established based on pulse repetition frequencies. In some aspects concurrent channels may be established based on pulse position or offsets. In some aspects concurrent channels may be established based on time hopping sequences. In some aspects concurrent channels may be established based on pulse repetition frequencies, pulse positions or offsets, and time hopping sequences.

Those of skill in the art would understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, processors, means, circuits, and algorithm steps described in connection with the aspects disclosed herein may be implemented as electronic hardware (e.g., a digital implementation, an analog implementation, or a combination of the two, which may be designed using source coding or some other technique), various forms of program or design code incorporating instructions (which may be referred to herein, for convenience, as "software" or a "software module"), or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

In addition, the various illustrative logical blocks, modules, and circuits described in connection with the aspects disclosed herein may be implemented within or performed by an integrated circuit ("IC"), an access terminal, or an access point. The IC may comprise a general purpose processor, a digital signal processor (DSP), an application specific integrated circuit (ASIC), a field programmable gate array (FPGA) or other programmable logic device, discrete gate or transistor logic, discrete hardware components, electrical components, optical components, mechanical components, or any combination thereof designed to perform the functions described herein, and may execute codes or instructions that reside within the IC, outside of the IC, or both. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

It is understood that any specific order or hierarchy of steps in any disclosed process is an example of a sample approach. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

The steps of a method or algorithm described in connection with the aspects disclosed herein may be embodied directly in hardware, in a software module executed by a processor, or in a combination of the two. A software module (e.g., including executable instructions and related data) and other data may reside in a data memory such as RAM memory, flash memory, ROM memory, EPROM memory, EEPROM memory, registers, a hard disk, a removable disk, a CD-ROM, or any other form of computer-readable storage medium known in the art. A sample storage medium may be coupled to a machine such as, for example, a computer/processor (which may be referred to herein, for convenience, as a "processor") such the processor can read information (e.g., code) from and write information to the storage medium. A sample storage medium may be integral to the processor. The processor and the storage medium may reside in an ASIC. The ASIC may reside in user equipment. In the alternative, the processor and the storage medium may reside as discrete components in user equipment. Moreover, in some aspects any suitable computer-program product may comprise a computer-readable medium comprising codes relating to one or more of the aspects of the disclosure. In some aspects a computer program product may comprise packaging materials.

While the invention has been described in connection with various aspects, it will be understood that the invention is capable of further modifications. This application is intended to cover any variations, uses or adaptation of the invention following, in general, the principles of the invention, and including such departures from the present disclosure as come within the known and customary practice within the art to which the invention pertains.

## Claims

1. A method for improving resource control in a wireless communication system, the method comprising:
receiving (602, 802), by a user equipment, named UE hereinafter, a configuration including at least a first contention-based resource pool and a second contention-based resource pool;
receiving (604, 804), by the UE, at least one threshold value related to a received power for a DL transmission; and
selecting, by the UE, the first contention-based resource pool or the second contention-based resource pool for a D2D transmission based on at least the threshold value, wherein the first contention-based resource pool is configured for resources for multiplexing Device-to-Device , named D2D hereinafter, transmission(s) and Downlink, named DL hereinafter, transmission(s) in power domain, and the second contention-based resource pool is configured for resources dedicated to D2D transmission(s), wherein the second contention-based resource pool does not include the resources for multiplexing D2D transmission(s) and DL transmission(s) in power domain.

2. The method of claim 1, further comprising:
decoding, by the UE, the DL transmission before decoding the D2D transmission when the D2D transmission and the DL transmission use a same resource of the first contention-based resource pool.

3. The method of claim 1 or claim 2, further comprising:
providing (606), by the UE, an indication to another UE based on at least the threshold value.

4. The method of claim 3, wherein the indication designates whether a resource from the first contention-based resource pool or second contention-based resource pool should be used by another UE to perform a D2D transmission.

5. The method of any preceding claim, wherein selecting the first contention-based resource pool or the second contention-based resource pool for D2D transmission means to monitor the first contention-based resource pool, the second contention-based resource pool, or both the first contention-based resource pool and the second contention-based resource pool.

6. The method of any preceding claim, wherein the selection is based on at least comparison between a measured result and the threshold value.

7. The method of any preceding claim, wherein the threshold value is related to Signal to Interference plus Noise Ratio, named SINR, Reference Signal Received Power, named RSRP, Reference Signal Receive Quality, named RSRQ, or pathloss.

8. The method of claim 1, further comprising:
receiving a signaling from a network node based on at least a sequence number associated with the first resource pool if the UE (116) is monitoring the at least one resource pool, wherein the signaling indicates at least one DL transmission; and
decoding the D2D transmission based on at least the signaling, wherein the D2D transmission is multiplexed with the at least one DL transmission in power domain.

9. The method of claim 8, wherein receiving the signaling comprises descrambling the signaling by the sequence number.

10. The method of claim 8 or claim 9, wherein decoding the D2D transmission comprises decoding the at least one DL transmission indicated by the signaling, canceling the at least one DL transmission, and decoding the D2D transmission.

11. The method of any one of claims 8 to 10, wherein the signaling indicates information related to Successive Inference Cancelation, named SIC hereinafter, information for the UE(116) to perform SIC to decode the at least one contention-based D2D transmission, information related to DL transmission(s), Modulation and Coding Scheme, named MCS, used by DL transmission(s), or information used to check integrity of DL transmission(s).

12. The method of any one of claims 8 to 11, wherein the sequence number is a fixed value or indicated by broadcasting, the system information, or dedicated signaling.

13. A communication device (300) for improving resource control in a wireless communication system, the communication device comprising:
a control circuit (306);
a processor (308) installed in the control circuit (306); and
a memory (310) installed in the control circuit (306) and operatively coupled to the processor (308);
wherein the processor (308) is configured to execute a program code stored in the memory for carrying out the method steps according to any one of claims 1 to 12.

## Patentansprüche

1. Verfahren zum Verbessern einer Ressourcenkontrolle in einem drahtlosen Kommunikationssystem, wobei das Verfahren umfasst:
Empfangen (602, 802) durch eine Benutzervorrichtung, im Folgenden UE genannt, einer Konfiguration, die mindestens einen ersten konkurrenzbasierten Ressourcenpool und einen zweiten konkurrenzbasierten Ressourcenpool umfasst;
Empfangen (604, 804), durch die UE, mindestens eines Schwellenwertes in Bezug auf eine empfangene Leistung für eine DL-Übertragung; und
Auswählen, durch die UE, des ersten konkurrenzbasierten Ressourcenpools oder des zweiten konkurrenzbasierten Ressourcenpools für eine D2D-Übertragung basierend mindestens auf dem Schwellenwert, wobei der erste konkurrenzbasierte Ressourcenpool für Ressourcen für eine Bündelung von Vorrichtung-zu-Vorrichtung, im Folgenden D2D genannt, Übertragung(en) und Downlink, im Folgenden DL genannt, Übertragung(en) in einer Leistungsdomäne eingerichtet ist, und der zweite konkurrenzbasierte Ressourcenpool für zu D2D-Übertragung(en) zugeordneten Ressourcen eingerichtet ist, wobei der zweite konkurrenzbasierte Ressourcenpool keine Ressourcen für die Bündelung von D2D-Übertragung(en) und DL-Übertragung(en) in der Leistungsdomäne enthält.

2. Verfahren nach Anspruch 1, weiter umfassend:
Dekodieren, durch die UE, der DL-Übertragung vor dem Dekodieren der D2D-Übertragung, wenn die D2D-Übertragung und die DL-Übertragung eine gleiche Ressource des ersten konkurrenzbasierten Ressourcenpools verwenden.

3. Verfahren nach Anspruch 1 oder Anspruch 2, weiter umfassend:
Bereitstellen (606), durch die UE, einer mindestens auf dem Schwellenwert basierenden Kennzeichnung für eine andere UE.

4. Verfahren nach Anspruch 3, wobei die Kennzeichnung angibt, ob eine Ressource von dem ersten konkurrenzbasierten Ressourcenpool oder dem zweiten konkurrenzbasierten Ressourcenpool von einer anderen UE zum Durchführen einer D2D-Übertragung verwendet werden soll.

5. Verfahren nach einem der vorhergehenden Ansprüche, wobei das Auswählen des ersten konkurrenzbasierten Ressourcenpools oder des zweiten konkurrenzbasierten Ressourcenpools für die D2D-Übertragung bedeutet, den ersten konkurrenzbasierten Ressourcenpool, den zweiten konkurrenzbasierten Ressourcenpool oder beide konkurrenzbasierte Ressourcenpools zu überwachen.

6. Verfahren nach einem der vorhergehenden Ansprüche, wobei das Auswählen mindestens auf einem Vergleich zwischen einem gemessenen Ergebnis und dem Schwellenwert basiert.

7. Verfahren nach einem der vorhergehenden Ansprüche, wobei sich der Schwellenwert auf Signal-zur-Interferenz-plus-Rausch-Verhältnis, SINR genannt, Referenzsignal-Empfangs-Leistung, RSRP genannt, Referenzsignal-Empfangsqualität, RSRQ genannt, oder Pfadverlust bezogen ist.

8. Verfahren nach Anspruch 1, weiter umfassend:
Empfangen einer Signalisierung von einem Netzwerkknoten basierend mindestens auf einer Sequenznummer verknüpft mit dem ersten Ressourcenpool, falls die UE (116) den mindestens einen Ressourcenpool überwacht, wobei die Signalisierung mindestens eine DL-Übertragung kennzeichnet; und
Dekodieren der D2D-Übertragung basierend mindestens auf der Signalisierung, wobei die D2D-Übertragung mit der mindestens einen DL-Übertragung in der Leistungsdomäne gebündelt ist.

9. Verfahren nach Anspruch 8, wobei das Empfangen der Signalisierung ein Entschlüsseln der Signalisierung durch die Sequenznummer umfasst.

10. Verfahren nach Anspruch 8 oder Anspruch 9, wobei das Dekodieren der D2D-Übertragung ein Dekodieren der mindestens einen DL-Übertragung, die von der Signalisierung gekennzeichnet ist, Stornieren der mindestens einen DL-Übertragung und Dekodieren der D2D-Übertragung umfasst.

11. Verfahren nach einer der Ansprüche 8 bis 10, wobei die Signalisierung Informationen in Bezug auf eine sukzessive Inferenzkompensation, im Folgenden SIC genannt, Informationen für die UE (116) zum Durchführen der SIC zum Dekodieren der mindestens einen konkurrenzbasierten D2D-Übertragung, Informationen in Bezug auf DL-Übertragung(en), Modulations- und Kodierungsschema, MCS genannt, die von DL-Übertragung(en) genutzt werden, oder Information zum Prüfen der Integrität der DL-Übertragung(en) kennzeichnet.

12. Verfahren nach einem der Ansprüche 8 bis 11, wobei die Sequenznummer ein fester Wert oder durch einen Rundsendevorgang, die Systeminformation oder eine zugeordnete Signalisierung gekennzeichnet ist.

13. Eine Kommunikationsvorrichtung (300) zum Verbessern einer Ressourcenkontrolle in einem drahtlosen Kommunikationssystem, die Kommunikationsvorrichtung umfasst:
eine Steuerschaltung (306);
einen Prozessor (308), der in der Steuerschaltung (306) installiert ist; und
einen Speicher (310), der in der Steuerschaltung (306) installiert und operativ mit dem Prozessor (308) gekoppelt ist;
wobei der Prozessor (308) zum Ausführen eines in dem Speicher gespeicherten Programmcodes zum Ausführen der Verfahrensschritte nach einem der Ansprüche 1 bis 12 eingerichtet ist.

## Revendications

1. Procédé pour améliorer la commande de ressources dans un système de communication sans fil, le procédé comprenant le fait :
de recevoir (602, 802), par un équipement utilisateur, ci-après désigné par UE, une configuration comportant au moins une première réserve de ressources basée sur la contention et une deuxième réserve de ressources basée sur la contention ;
de recevoir (604, 804), par l'UE, au moins une valeur seuil liée à une puissance reçue pour une transmission DL ; et
de sélectionner, par l'UE, la première réserve de ressources basée sur la contention ou la deuxième réserve de ressources basée sur la contention pour une transmission D2D sur la base d'au moins la valeur seuil, où la première réserve de ressources basée sur la contention est configurée pour des ressources pour multiplexer une/des transmission(s) de Dispositif à Dispositif, ci-après désigné par D2D, et une/des transmission(s) de liaison descendante, ci-après désignée par DL, dans un domaine de puissance, et la deuxième réserve de ressources basée sur la contention est configurée pour des ressources dédiées à une/des transmission(s) D2D, dans lequel la deuxième réserve de ressources basée sur la contention n'inclut pas les ressources pour multiplexer une/des transmission(s) D2D et une/des transmission(s) DL dans le domaine de puissance.

2. Procédé de la revendication 1, comprenant en outre le fait :
de décoder, par l'UE, la transmission DL avant de décoder la transmission D2D lorsque la transmission D2D et la transmission DL utilisent une même ressource de la première réserve de ressources basée sur la contention.

3. Procédé de la revendication 1 ou 2, comprenant en outre le fait :
de fournir (606), par l'UE, une indication à un autre UE sur la base d'au moins la valeur seuil.

4. Procédé de la revendication 3, dans lequel l'indication désigne si une ressource provenant de la première réserve de ressources basée sur la contention ou de la deuxième réserve de ressources basée sur la contention doit être utilisée par un autre UE pour effectuer une transmission D2D.

5. Procédé de l'une des revendications précédentes, dans lequel la sélection de la première réserve de ressources basée sur la contention ou de la deuxième réserve de ressources basée sur la contention pour une transmission D2D signifie la surveillance de la première réserve de ressources basée sur la contention, de la deuxième réserve de ressources basée sur la contention, ou à la fois de la première réserve de ressources basée sur la contention et de la deuxième réserve de ressources basée sur la contention.

6. Procédé de l'une des revendications précédentes, dans lequel la sélection est basée sur au moins une comparaison entre un résultat mesuré et la valeur seuil.

7. Procédé de l'une des revendications précédentes, dans lequel la valeur seuil est liée à un Rapport Signal sur Interférence plus Bruit, désigné par SINR, à une Puissance Reçue de Signal de Référence, désignée par RSRP, à une Qualité de Réception de Signal de Référence, désignée par RSRQ, ou à un affaiblissement de propagation.

8. Procédé de la revendication 1, comprenant en outre le fait :
de recevoir une signalisation à partir d'un noeud de réseau sur la base d'au moins un numéro de séquence associé à la première réserve de ressources si l'UE (116) surveille l'au moins une réserve de ressources, où la signalisation indique au moins une transmission DL ; et
de décoder la transmission D2D sur la base d'au moins la signalisation, où la transmission D2D est multiplexée avec l'au moins une transmission DL dans un domaine de puissance.

9. Procédé de la revendication 8, dans lequel la réception de la signalisation comprend le désembrouillage de la signalisation par le numéro de séquence.

10. Procédé de la revendication 8 ou 9, dans lequel le décodage de la transmission D2D comprend le décodage de l'au moins une transmission DL indiqué par la signalisation, l'annulation de l'au moins une transmission DL, et le décodage de la transmission D2D.

11. Procédé de l'une quelconque des revendications 8 à 10, dans lequel la signalisation indique des informations liées à l'Annulation d'Interférences Successives, désignée ci-après par SIC, des information pour l'UE (116) pour effectuer la SIC afin de décoder l'au moins une transmission D2D basée sur la contention, des informations liées à une/des transmission(s) DL, un Schéma de Modulation et de Codage, désigné par MCS, utilisé par la/les transmission(s) DL, ou des informations utilisées pour vérifier l'intégrité de transmission(s) DL.

12. Procédé de l'une quelconque des revendications 8 à 11, dans lequel le numéro de séquence est une valeur fixe ou est indiqué par diffusion, par les informations système, ou par signalisation dédiée.

13. Dispositif de communication (300) pour améliorer la commande de ressources dans un système de communication sans fil, le dispositif de communication comprenant :
un circuit de commande (306) ;
un processeur (308) installé dans le circuit de commande (306) ; et
une mémoire (310) installée dans le circuit de commande (306) et couplée de manière fonctionnelle au processeur (308) ;
dans lequel le processeur (308) est configuré pour exécuter un code de programme stocké dans la mémoire pour réaliser les étapes du procédé selon l'une quelconque des revendications 1 à 12.
